# EUROPEAN PATENT APPLICATION

(11) **EP 3 560 810 A1**
(43) Date of publication of application: **30.10.2019**
(21) Application number: 19020308.3
(22) Date of filing: 24.04.2019
(51) Int. Cl.: B62L 3/02, B60T 7/08, B60T 8/17, B60T 8/32, B60T 11/04

(54) **DEVICE FOR THE BRAKING FORCE REGULATION IN CABLE OR HYDRAULIC BRAKING SYSTEMS**

(30) Priority: 25.04.2018 IT 201800004690
(71) Applicant: Pirovano, Gian Luigi, 24100 Bergamo (IT); Terzi, Enrico, 24100 Bergamo (IT); Nespoli, Stefano, 20831 Seregno (IT)
(72) Inventor: Nespoli, Stefano, 20831 Seregno (IT)
(74) Representative: Chimini, Francesco

(57) **Abstract**

This patent application refers to a device able to regulate the braking force in mechanical or hydraulic braking systems, preferably bicycles. In the case of hydraulic braking systems, the goal is to reduce the pressure of the hydraulic circuit fluid. In the case of mechanical braking systems, the goal is to reduce the cable tension, in a Bowden cable force transmission system.

In particular, in both cases the goal is to drastically reduce the braking force, when an activation command based on measures provided by sensors is sent by the electronic control unit to the actuator, in a limited time, with a low power consumption and low mechanical stress to the involved components, with a system safety and reliability oriented. The braking force regulation is executed by a mechanical actuation system with activation on demand of a control unit exploiting signals of sensors. Said mechanical actuation system is composed of a mechanical linkage, characterized by two states, "passive" and "active", able to superimpose its action to the human action on the brake lever, and of an activation mechanism that, when activated, allows the transition of the mechanical linkage from the passive to the active configuration, fostered by the forces present in the system. Before and after the activation, the device leaves the braking system where it is inserted functionally equivalent to a system without the device. The braking capability of the system is preserved also in case of partial breakage of the actuator itself, or in case of undesired activation. The device is equipped with a reset system to the passive configuration, tailored to enabling another intervention to regulate the braking force.

## Description

### Field of application

In the mechanical braking system version, the device object of this patent application has as aim the controlled reduction of tension or normal drive stress, transmitted with a cable to its ends, in a Bowden cable force transmission system. This system finds application in mechanical braking systems, everywhere applied, for example but not only in bicycles, strollers, baby walkers and similar. It is suitable especially for bicycles, systems where the energy available to activate the device is limited and the weight is an essential factor, especially but not only in bicycles without electrical push thrust assistance. In mechanical braking systems tension is controlled by a typically manual gear lever system which allows the modulation of the braking force applied to the wheel. The device object of this patent application aims to reduce this tension from the one corresponding to the work point set to lower values, in a short time interval with low energy consumption and a limited mechanical stress to the involved components, with a system oriented to reliability and safety. A possible application of this system is the reduction of the tension transmitted by the cable to its ends in case of risk of occurrence of the tire locking with subsequent sliding and loss of adherence, lifting of the wheel or loss of stability, where a reduction of the transmitted tension and the subsequent reduction of the braking force applied by the brake to the wheel reduces such risk.

In the version suitable for hydraulic braking systems, the scope of the device object of this patent application is the controlled reduction of the pressure of the fluid present in the hydraulic circuit. Such device finds application, for example but not only, in braking systems of vehicles, and in particular of bicycles. It particularly suits systems where the following are relevant:
- Weight
- Speed of actuation
- Energy consumption
- Safety

An example of preferred field of application is then braking systems of bicycles, regardless of the kind of the brakes (disc brake, rim brake or whatever) and the kind of the bicycle (racing bike, track, mountain or other kinds). In such field of application, the larger the braking force applied to the wheel the larger the pressure of the fluid in the hydraulic circuit of the brake. In hydraulic braking systems the pressure is controlled by a typically manual gear lever system (the brake lever) which allows the modulation of the braking force applied to the wheel. The device object of this patent application aims to reduce this tension from the one corresponding to the work point set to lower values, in a short time interval with low energy consumption and a limited mechanical stress to the involved components, with a system oriented to reliability and safety. One of the possible applications of this system is the regulation of the pressure of the hydraulic circuit of the brake in case of risk of occurrence of the tire locking with subsequent sliding and loss of adherence, or stoppie, where a reduction of the pressure of the fluid in the circuit and subsequent reduction of the braking force applied by the brake to the wheel reduces such risks.

### State of the art

In the version for cable braking systems, the tension transmitted by the cable itself between its ends is useful for shifting the point of application of the force so transferred from one end of the cable to the other, for example in mechanical transmission systems of the Bowden cable type. In cable braking systems, this force is generated at an input side, generally connected to a manually operated lever, and transmitted to an actuation side, take the caliper of a rim brake or a disc brake as a non-exhaustive example. Under normal operating conditions the force regulation is performed directly from one side to the other by action on the input side, generally connected to a manually operated lever, according to a direct relationship between the force applied to the lever, the position of the lever itself, the tension of the cable and force transmitted to the other end of the cable. This regulation technique generates potential problems in the event of an excess of force applied to the lever and transmitted, with respect to the maximum one that can be implementable by the system as a whole in the specific application and / or situation. In the example of rim braking, an excessive force applied to the brake lever, consequently transmitted through the cable to the rim-type brake caliper, can cause the wheel to lock, with consequent danger of fall for the cyclist, since the wheel itself is unable to implement this force on the surface of contact with the ground, or a stoppie. The cyclist's reaction time is generally not short enough to detect the onset of these problems and to act accordingly by reducing the force applied to the lever.

In order to mitigate the probability of the occurrence of these types of problems, at present there are solutions that modify the direct relationship between the lever position, the cable tension and the force applied to the wheel. In this regard, see patents US5566789 and EP1468904B1. Both are based on the modification of the relationship between lever position and force, with the introduction of a spring that limits the applied force for the same displacement of the lever. In these solutions the reduction takes place continuously, even when not necessary, and in general the action performed is preventive, meaning that it reduces the probability of an excessive force applied by increasing the required displacement of the lever per unit of force, nothing being able to do in case of excessive force applied and therefore transmitted but not implementable by the system as a whole. The device object of the present application is able to modify the relationship between the position of the lever and the force only when requested and, thanks to its speed of intervention, it corrects any excessive force applied and therefore transmitted but not implementable on the system as a whole. Moreover, the cited patents include the addition of a component in the braking system which continuously modifies the relationship between the displacement of the lever and the braking force, while the device object of the present patent application can make the braking system indistinguishable from one that misses it, except for the instants in which it is operated.

Also consider the patent US005730256A, where the reduction of the braking force is based on mechanical oscillations depending on the wheel speed and the braking force itself. The characteristic of the reduction is predetermined in the initial setting phase of the device and it does not adapt to the specific operating condition, therefore it influences the behavior of the system even when its intervention is not necessary. Furthermore, it provides a mechanical connection with the wheel to draw power and measure the rotation speed, this way creating a constructive complication and subtracting mechanical power available for movement, this being a particularly undesired side effect for pedal-powered vehicles. The device object of the present application acts only in case of external command, properly calibrated, and it does not need to draw power from the wheel.

Also consider the patent EP3078557A1, in which is presented an actuator for bicycles actively controlled by means of a piezoelectric component, which determines the braking force through its elongation or shortening. Note that in this solution the actuator is required to directly regulate all the braking force since it is always subject to it, thus implying a greater mechanical stress, energy consumption and dimensions, which make its application limited. It is also necessary to operate the piezoelectric actuator also for the reverse movement, to return to the initial state, with further energy consumption.

Consider also DE102013213413A1, characterized by a similar operating principle although of different realization, with the presence of a controller and an actuator subject to all the braking force. Other and numerous construction variants are listed in US20120305345A1, characterized by a similar operating principle and an advanced control unit. Each realization needs to operate the actuator also for the reverse movement, to return to the initial state, with further energy consumption.

In the version for hydraulic braking systems, the state of art comprises essentially two categories of systems, specifically:
1. Systems with continuous actuation, with continuous regulation of the braking force over time. In this kind of systems typically there is need for a lot of energy and a large weight of the hardware, being this problem even more relevant in case of a bicycle
2. Systems with discrete actuation, but based on the oil flow to a separate dedicated circuit. Typically, this kind of systems makes use of two-way valves that suitably open and close the auxiliary circuit so as to modulate the fluid pressure in the main circuit, and to allow the regulation of the braking.
   Some of the drawbacks of this kind of systems, overcome by the device object of this patent application, take place in the dimensions and weight of the valves, in the necessity of adding a lot of additional components that are subject to wearing and degrading, and in the difficult applicability to bicycles, given the different operating pressures.

In addition to the known solutions applied in the field of cars and motorcycles, which however are characterized by different weight, size and energy constraints, consider in particular patent DE102010038525A1 relating to bicycles which uses a piezoelectric component to increase or decrease the volume of the oil in the circuit, thus modulating the pressure. However, this solution requires a continuous control and an actuator capable of withstanding the pressures developed in these circuits, and at the same time guaranteeing a sufficient increase in volume to obtain an adequate pressure reduction, which place considerable constraints on dimensions and energy supply. It is also necessary to operate the piezoelectric actuator also for the reverse movement, to return to the initial state, with further energy consumption.

### Description of the Figures

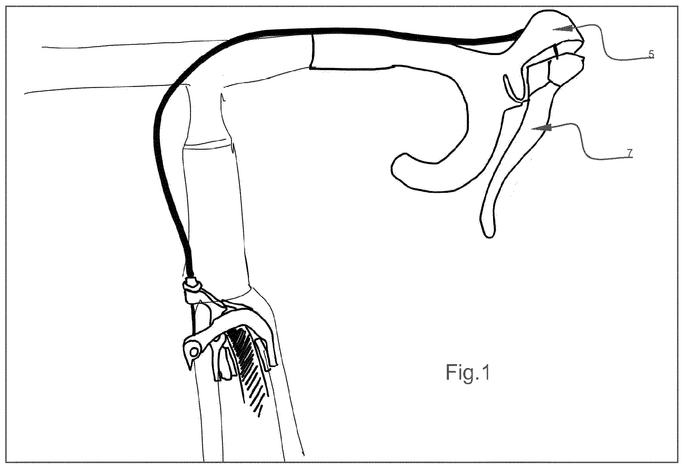

Fig.1 represents a common mechanical braking system of the front wheel of a road bike. In particular are indicated the brake lever (7) and the body of the brake command (5)

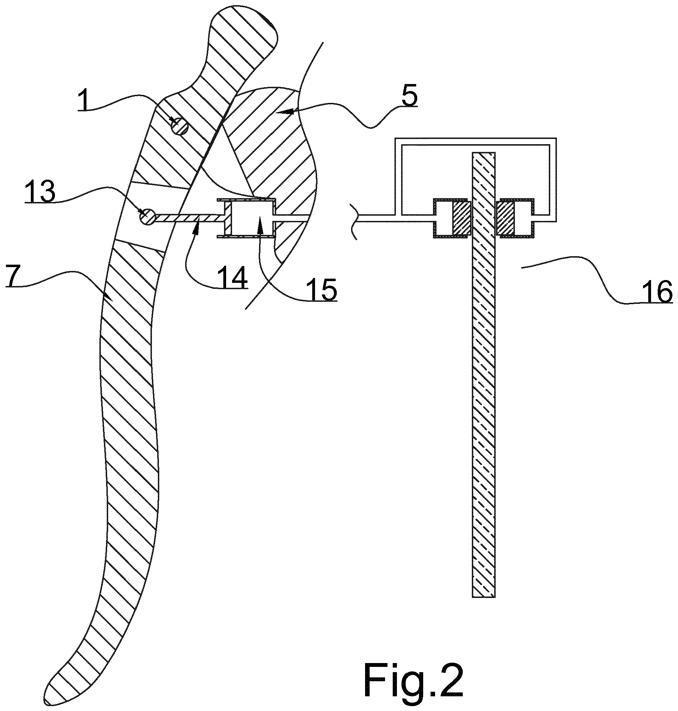

Fig.2 represents the section of a hydraulic braking system. In particular are indicated the brake lever (7), the body of the brake command (5), the pivot of the lever (1), the joint between the cylinder stem and the lever (13), the piston of the cylinder (14), the cylinder (15) and the ensemble of brake disc and hydraulic brake caliper (16), linked to the pipe of the hydraulic circuit.

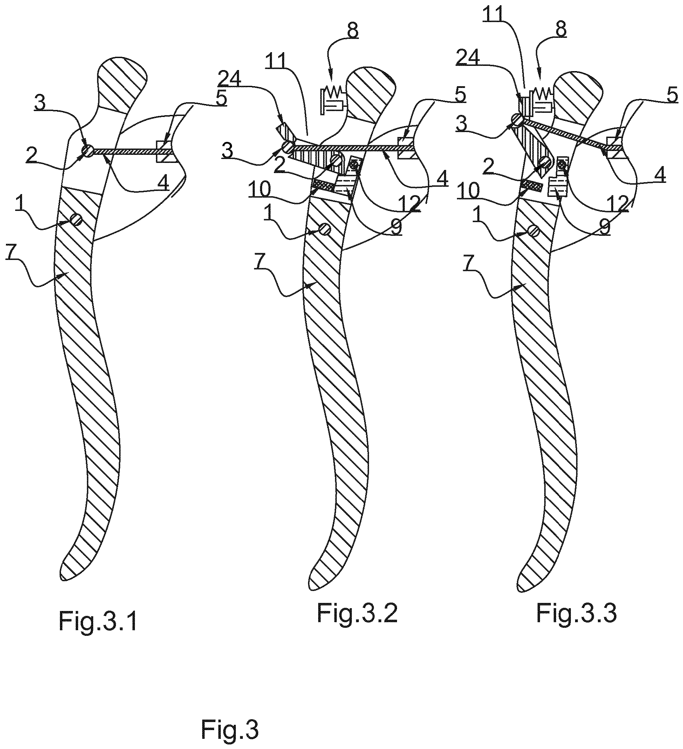

Fig.3 represents the preferred embodiment of the device when applied to cable braking systems. In particular, Fig.3.1 shows the section of the lever (7) without the installed device, where are indicated the pivot (1) of rotation with respect to the body of the brake command (5), the cable (4) and the overlapping head of the cable (3) and the point (2) of application of the force transmitted by the cable to the lever. Fig.3.2 shows the same lever as Fig.3.1, but with the mechanical linkage (11) and other components of the device integrated into the lever itself, such as the spring-damper group (8), the rigid body (24) with orientation almost parallel to the cable constituting the mechanical linkage in the preferred embodiment that separates the head of the cable (3) and point (2) of the application of the force, the activation mechanism (9), the actuator group (10) of the activation mechanism, comprising a solenoid, electric motor or equivalent. Fig.3.3 shows the same components as Fig.3.2 with the mechanical linkage (11) in active configuration, in which the rigid body (24) is rotated around its pivot in point (2) and in which the activation mechanism (9) is shifted so that the activation of the mechanical linkage is allowed.

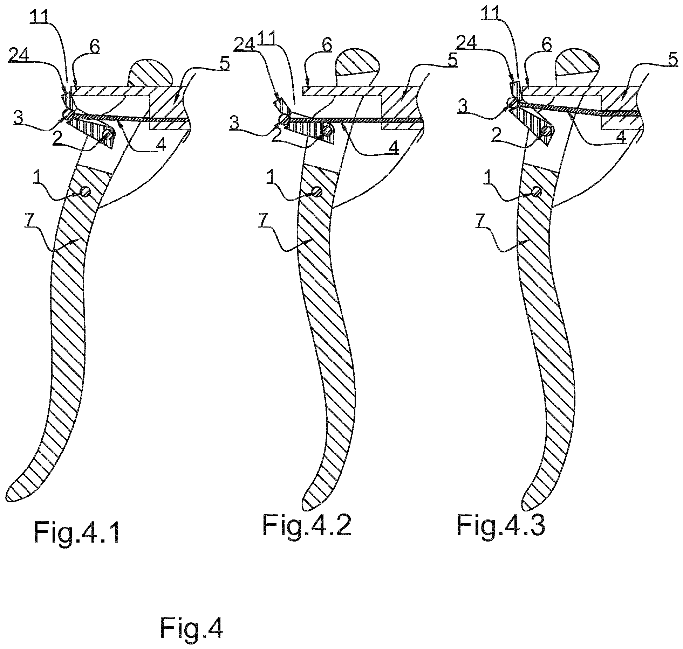

Fig.4 shows the embodiment represented in Fig.3, where the reset pivot (6), which acts on the rigid body (24), is highlighted, fixed to the body of the brake command (5). In particular, Fig.3.3 shows the rigid body (24) in passive configuration, with lever (7) not operated by the cyclist. After the operation of the cyclist, represented in Fig.4.2, it occurs that the rigid body (24) and the reset pivot (6) are separated. Fig.4.3 shows the reset phase, in which the lever is released by the cyclist at the end of the braking maneuver, and the rigid body (24) is back in contact with the reset pivot (6) and is hence pushed again into passive configuration.

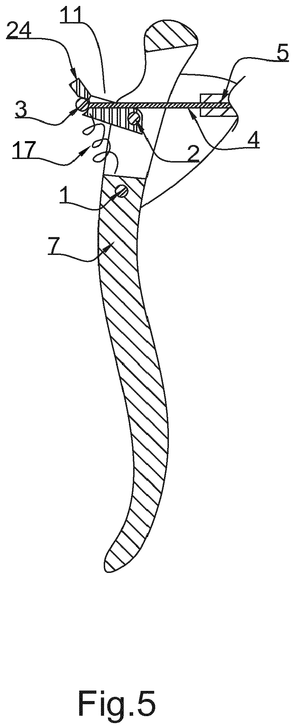

Fig.5 represents the preferred embodiment as in Fig.3, where the reset spring (17) is highlighted.

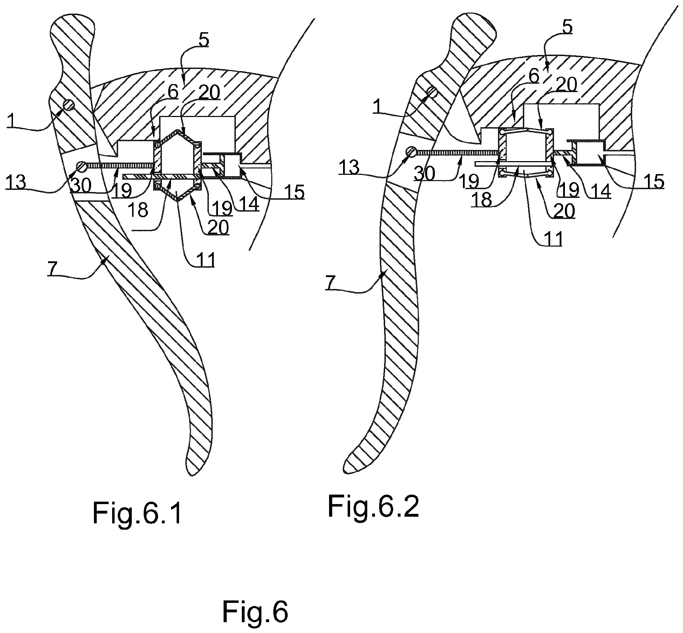

Fig.6 represents the preferred embodiment of the device when applied to hydraulic braking systems. In particular, Fig.6 shows the section of the lever (7) with the following ones integrated: the mechanical linkage (11) composed in this figure of two groups of fork and knife rods (20), hinged to two plates (19); one plate connected through a stem (30) to the lever (7) with a hinge joint (13), the other plate to the master cylinder piston (14); a rod (18) constrained by interlocking to one plate and by a slider constraint to the other plate; the cylinder (15) and its piston (14) to command the brake; the reset pivot (6) for the body of the brake command (5) is highlighted, which acts on the rods (20). Fig.6.1 shows the reset phase, in analogy to Fig.4.3, where the reset pivot (6) constrains the rods (20) to return to the passive configuration, displayed in Fig.6.2

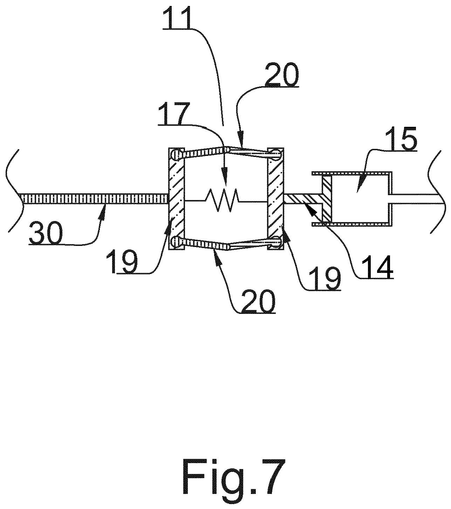

Fig.7. shows the section of the device in its embodiment of Figure 6, where the reset spring (17) is highlighted, in analogy to Fig.5.

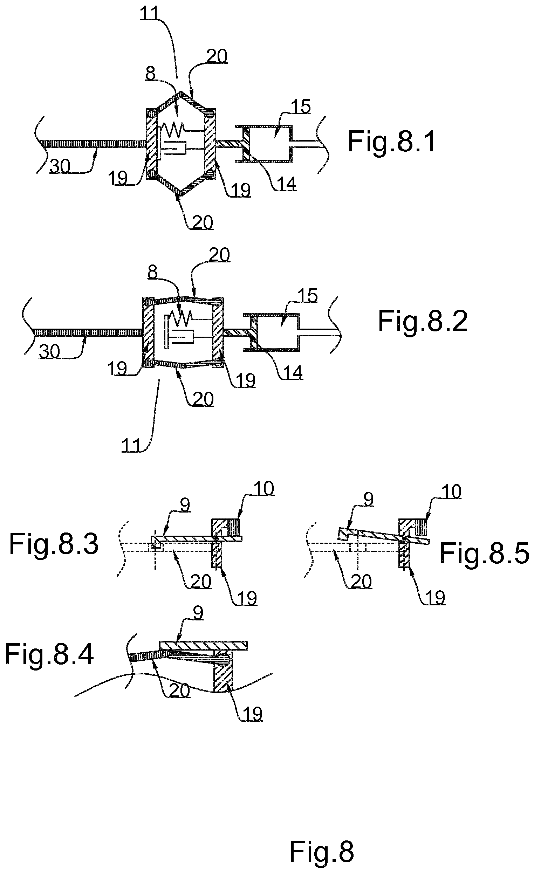

Fig.8 shows the section of the device in its embodiment of Fig.6, where the spring-damper group (8) is highlighted in active configuration (Fig.8.1) while it is exerting a force between the two plates (19), and in passive configuration (Fig.8.2) where the spring-damper group (8) is represented not in touch to any of the two plates (19) in the case in which it is desired to have it in action only in active configuration. In the same Fig.8 the activation mechanism (9) is shown, when it prevents (Fig.8.3, rotated by 90° with respect to Fig.8.2) the movement of a group of rods (20), and when it allows (Fig.8.5) such a movement; indeed it is reported the actuator (10) constrained to a plate (19) of the activation mechanism (9), hinged to the same plate (19). In Fig.8.4 it is reported the group of rods (20) forming an angle of nearly 180° in passive configuration, the plate (19) and the activation mechanism (9) in the same section as Fig.8.2, in which a rotation of the activation mechanism (9), which differentiates Fig. 8.3 to Fig. 8.5, takes place around a vertical axis lying in the plane of the figure.

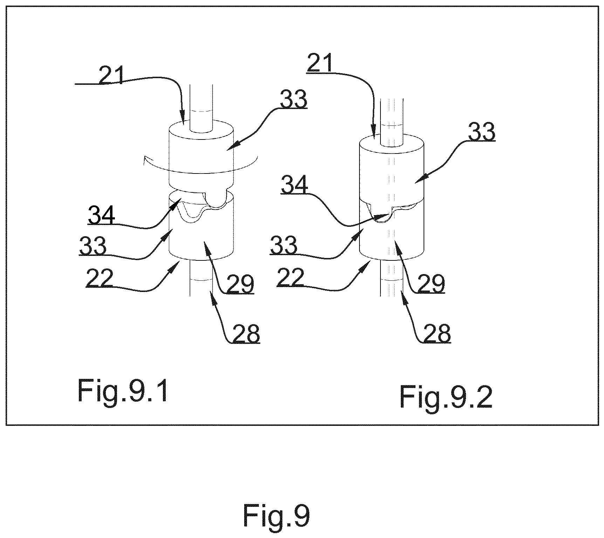

Figure 9 represents an embodiment of the mechanical linkage inserted as an example in a mechanical braking system of Bowden cable type, showing the housing (28) and the cable (29), in which the ends of the linkage (21,22) are the ends of the two components (33) in contact with the contact surface (34) suitably designed, in passive configuration (Fig.9.1) and active (Fig.9.2).

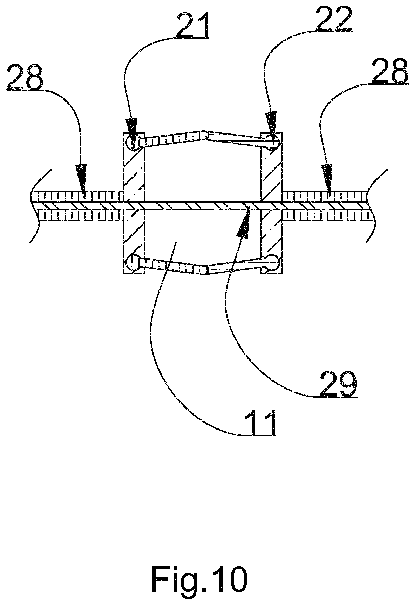

Fig.10 represents the installation of the mechanical linkage (11) in series to a housing (28) of a cable braking system of Bowden cable type, showing the cable (29) and the ends of the linkage (21,22) which generate an interruption of the housing (28).

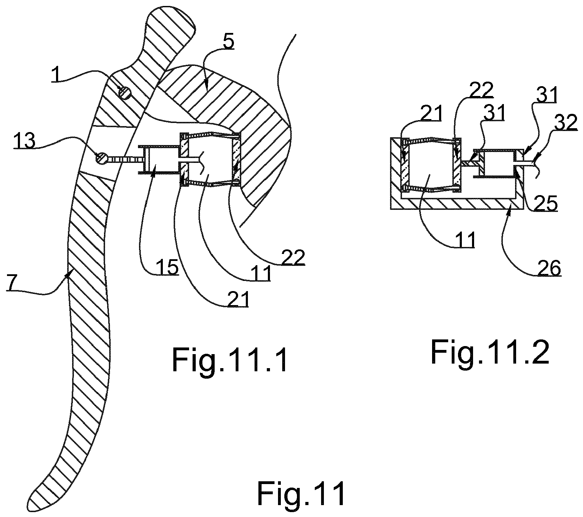

Fig.11 shows two possible installation positions of the mechanical linkage (11) when the device is applied to hydraulic braking systems. In particular Fig. 11.1 shows the mechanical linkage (11) placed on the side of the body of brake command (5) with respect to the cylinder (15) and not on the side of the brake lever (5) as shown in Fig.6, with its ends (21,22) connected to the cylinder (15) and the body of the brake command (5). Fig. 11.2 represents the installation of the mechanical linkage (11) in series to an expansion chamber (25) which is additional to a normal hydraulic braking system, the pipe (32) through which the expansion chamber (25) is in hydraulic communication with the circuit of the braking system, in which the ends of the expansion chamber (31) are constrained one directly to one end (22) of the mechanical linkage (11) and the other through a connection component (26) to the other end (21) of mechanical linkage (11).

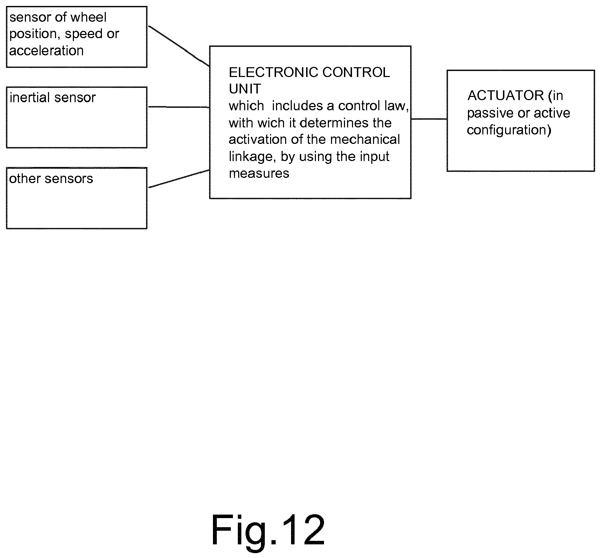

Fig.12 shows the block scheme of functions of the device, with sensors (on the left in Figure) linked and transmitting measures to an electronic control unit (in the middle), which in turns controls the activation of the actuator (on the right)

### Presentation of the invention

The device object of the present patent application can be installed on mechanical braking systems or on hydraulic braking systems. Both embodiments have in common the operating principle which is based on a solenoid or electric motor or equivalent which, when actuated, unlocks the switching of a mechanical linkage inserted in the transmission chain of the braking force, from the configuration named passive to the active one. In addition, for both embodiments a mechanically operated reset system is provided without the need for active adjustment.

In the case of installation in vehicles with cable braking systems, the object of the present patent application is a new device for adjusting the tension, or normal stress, transmitted by a cable to its ends, in a mechanical transmission system of Bowden cable type. This device is inserted in the transmission chain of the braking force, constituted by the cable, which is constrained at one end to a side called of "input", generally connected to a manually operated lever, and at the other end to an actuation place, in the preferred application a bicycle brake caliper (Fig. 1), and from the housing, inside which is the cable.

The force applied by the brake caliper to the wheel is a function of the length of cable engaged by the actuation place, in particular the greater the force the shorter such cable length, i.e. when the brake cable is pulled through the brake lever. From this it can be deduced that, in order to decrease the tension transmitted by the cable and therefore the force applied by the actuator, with the same displacement of the brake lever by the cyclist, it is necessary to reduce the portion of cable engaged in the actuation place, similarly to what happens releasing the brake lever, by decoupling the lever from the end of the cable by inserting a mechanical mechanism (Fig.3) or reducing the portion of cable engaged in the housing, reducing its length if necessary, by inserting the same mechanical mechanism in such a way as to create a discontinuity within the housing, which can be reduced by activating the mechanical mechanism. (Figure 10). The adjustment of the cable tension is carried out by means of a mechanical actuator with controlled activation. By imposing the instant of activation with a signal appropriately calculated by the electronic control unit, the mechanical actuation system allows to act on the relative distance between the ends of a mechanical mechanism, connected in series to the cable (Fig.3) or to the housing (Figure 10). The activation signal is generated by a controller which has as input data, for example in the case of braking for bicycles, position or speed of wheels or vehicle, inertial data or other variables useful for determining the state of the system and, processed by a dedicated algorithm, of the actuator operation opportunity.

In the case of application to hydraulic braking systems, there are two alternatives (Fig.11): a variant consists in acting on components already present, varying the stroke of the brake control piston and thus reducing the fluid pressure (Fig.11.1). In another variant, instead, it is possible to insert a different component, called "expansion chamber", in communication with the hydraulic circuit and equipped with extremes that, when approached or moved away, allow to vary the internal volume that can be occupied by the fluid of the hydraulic circuit (Fig.11.2). The mechanical actuation system produces the release of a component of the device, the expansion chamber, which allows to increase its internal volume, and therefore the space available to the fluid of the hydraulic circuit, from which consequently derives a decrease in the fluid pressure. The advantage of the second described variant is the use of a component that can be positioned as desired and can be built at will, without the construction constraints of the brake control cylinder, thus allowing a better control of the pressure and greater flexibility to preserve the integrity of the components of the braking system.

### Description of the preferred embodiment

In this section the preferred embodiment of the device object of the present patent application is presented in detail, specifying that different variants can be realized, as summarized in the claims. All these, however, refer to what is described in the "Presentation of the invention" section. The three kinematic mechanisms described below are not a priori associated with the type of braking system, they are associated with the sole purpose of the description of a preferred embodiment. Note that the preferred installation position of the kinematic mechanisms is one integrated in the brake control lever (Fig. 3-6), in case the need for compactness and invisibility is prevalent, or along the cable (Fig. 9 and 10) or hydraulic pipe (Fig. 11.2) so as to avoid replacing brake levers already installed in existing bicycles. Each installation position, including the braking force actuation place - such as the brake caliper, which is also part of the braking force transmission chain - maintains the operating principles stated in the presentation of the invention, and the consequent advantages.

In the preferred embodiment applied to mechanical braking systems (Fig.1), the device (Fig.3) object of the present patent application is characterized by the possibility of the actuator to be in two configurations: passive and active. The two configurations differ in the relative distance between the head of the cable (3) and the body of the brake command (5), allowing an integrated and invisible realization inside the lever, said distance determined by the position of the mechanical linkage (11), said mechanical linkage connected "in series" to the braking force transmission chain, so that the relative distance between (3) and (5) affects the force transmitted by the transmission chain. In particular, the mechanical linkage is preferably used between the brake lever (7) and the body of the brake command (5).

In the passive configuration, the lever (7) rotates when operated by the user around its fulcrum (1), and the mechanical linkage (11) moves integrally with it, since it is constrained in its own fulcrum (2) and by the activation mechanism (9), pulling the head of the cable (3) which extracts a greater portion of cable from the body of brake command, generating an increase in the braking force (Fig.3.2). As anticipated, the system acts analogously to one without the device installed, and it does not require energy.

When an external signal occurs, coming from the electronic control unit and calculated by the said unit according to a control law that uses as data the measurements coming from position, wheel speed and acceleration sensors, or inertial or other sensors (Fig. 12), the actuator (10) of the activation mechanism (9) is activated and causes its movement. Said control law determines from the measurement data the conditions of danger of wheel locking, stoppie or stability or other critical condition, in time to intervene automatically and promptly on the braking system.

The actuator (10) consists of a solenoid, electric motor or other similar actuator. When the activation mechanism (9) moves (Fig.3.3), rotating around its own pivot (12), it disengages the mechanical linkage (11), which consequently is only affected by the force of the cable through the head of the cable (3) and is free to rotate - without further need for actuation of the activation mechanism (9), or of any other electrical component - around its own fulcrum (2) up to the end of the stroke, the latter consisting of a group functionally acting as a spring-damper group (8), able to gradually stop the motion, thus adjusting the intensity of the impact with the end stop. In this configuration, named active, the braking force is reduced drastically due to the smaller portion of cable engaged for the same position of the lever, i.e. the relationship between the brake control lever position and the force transmitted by the transmission chain is changed, thus is the braking force, overlapping the effect of the device to the human one. The speed reduction is limited only by the inertia of the mechanical linkage (11) and not by the dynamics and inertia of the solenoid (10) and of the mechanical linkage (11), which can be fixed on the input side of the braking force - the lever - and can be of reduced dimensions since they are subjected to reduced forces due to the reduced angle between the cable (4) and the rigid body (24), and in any case only during the activation phase.

The system is equipped with an automatic reset, i.e. a mechanism that returns the system to the passive configuration starting from the active one. The reset can be carried out either by means of the reset pivot (6) attached to the body of brake command (5) (Fig.4) or by means of a suitably sized spring (17) (Fig.5), not using an electrically actuated active control system, and therefore not consuming energy.

In case of a reset pivot, when the lever (7) is released by the user and naturally rotates around its fulcrum (1) because it is subject to the torque given by the tension of the cable (4) (see Fig.4.3, 4.1), the mechanical linkage (11) hits the reset pivot (6) and for this reason it rotates around to its fulcrum (2), returning to the passive configuration passively.

In case of the spring (17) (Fig.5), when the pressure on the lever is dropped by the user, this rotates around its fulcrum (1) and the mechanical linkage (11) is in turn rotated around its fulcrum (2) by the action of the spring assembly (17), which dominates the residual tension of the cable, which is reduced since the rider is not braking. The spring must have a lower elastic constant than the force generally transmitted by a brake actuated, but greater than the force transmitted through the transmission chain by a brake not actuated in order to perform the function of passive resetting.

In the preferred embodiment applied to hydraulic braking systems (Figure 2), the device object of the present patent application is characterized by a mechanical linkage with the possibility of being in two configurations: passive and active. The two configurations differ in the relative distance between the two plates (19) of the device, connected "in series" to the braking force transmission chain, so that their relative distance influences the force transmitted by the transmission chain. Specifically, the device is preferably positioned between the brake lever (7) and the piston of the hydraulic circuit, allowing an integrated and invisible realization inside the lever.

In the passive configuration (Fig. 6.2), the lever rotates when operated around its own fulcrum (1), and the piston (14), constrained to the lever by the fulcrum (13), rotates with respect to the lever and transmits, through a mechanism with groups of knife and fork connecting rods (20), preferably but not exclusively two, the force to the piston inside the cylinder (15), which increases the pressure of the fluid and consequently generates the braking force on the actuation side of the system. As anticipated, the system acts analogously to one without the installed device.

When an external signal occurs, coming from the electronic control unit and calculated by the said unit according to a control law that uses as data the measurements coming from position, wheel speed and acceleration sensors, or inertial or other sensors (Fig. 12), the actuator (10) (Figs. 8.3, 8.4, 8.5) is activated and causes the movement of the activation mechanism (9), which is no longer in a constraining position and therefore allows the rotation of the relative group of knife and fork (20) connecting rods. The rotation of the group (20), similarly to the preferred embodiment applied to cable systems, after its release is free, and it does not require for its movement, and therefore for the reduction of the braking force, further movements of the activation mechanism (9) or any other electrical or electronic component. Consequently, also in this embodiment the speed of movement is limited only by the inertia of the mechanical linkage (11) and not by the dynamics and inertia of the solenoid (10) and of the activation mechanism (9), which can be fixed to the plate at the side of braking force input, and of small size since they are subjected to reduced forces due to the reduced angle between the connecting rods of each group, and in any case only during the activation phase. This control law determines from the measurement data the conditions of danger of wheel locking, stoppie or stability or other critical condition, in time to intervene automatically and promptly on the braking system.

The actuator consists of a solenoid, electric motor or other similar actuator. When the mechanical group of fork and knife connecting rod is activated, this determines, thanks to the constraint allowing only shift (18), a parallel displacement of its plates (19) and therefore a reduction of the relative distance, one of which is connected integrally to the piston (14) in the cylinder (15), increasing the volume of fluid contained in the cylinder and thus reducing the pressure of the fluid inside the hydraulic circuit and consequently the braking force. The travel of reduction of the relative distance between the plates caused by the activation of the fork and knife connecting rod is damped by an end stop (Fig. 8.1, 8.2) consisting of a group functionally acting as a spring-damper group (8), tailored to gradually stop the relative motion of the plates (19), thus adjusting the intensity of the impact with the end stop of the mechanical linkage (11). The braking force is reduced drastically given the change in the relationship between the brake control lever position and the position of the piston in the cylinder, consequently the force transmitted by the transmission chain, which is the braking force, superimposing the effect of the device to the human one and therefore the device is defined in active configuration.

The system is equipped with automatic reset, i.e. a mechanism that returns the system to passive configuration starting from the active one. The reset can be carried out either by a reset pivot (6) or by a suitably sized spring (17), not using an active electrically actuated control system and requiring no energy consumption.

In case of a reset pivot (Fig.6), when the lever (7) is released by the user and naturally rotates around its own fulcrum (1) since it is subject to the torque given by the return spring of the brake lever commonly present in the hydraulic braking system, the mechanical linkage (11) hits the reset pivot (6) and slides in the direction of the lever, causing the reposition of the fork and knife rod in a passive position (see Fig. 6.1-6.2) in a passive way.

In case of the spring (Fig.7) (17), as soon as the pressure on the lever is sufficiently reduced by the user, it rotates around its fulcrum and reduces the pressure transmitted by the piston (14) on the plate (19). The spring (17) exerts a repulsive force between the two plates (19) which dominates the compression, the latter reduced since it is not braking. The spring must be of elastic constant lower than the force generally transmitted by an actuated brake, but greater than the force transmitted through the transmission chain by an unactuated brake. The action of the spring is therefore able to bring the device back to the passive configuration in a passive way.

In the case of Fig. 9 the device object of the present patent application comprises a mechanical mechanism comprising two components (33) placed in contact along a suitably shaped surface (34) which is characterized by the possibility of being in two configurations: passive (Fig.9.1) and active (Fig.9.2), corresponding to the two possible mechanical couplings between the two components (33). The two configurations differ in the relative distance between the ends (21, 22) of the mechanical linkage (11), connected "in series" to the braking force transmission chain, for example but not exclusively in Fig.9 in series to the housing (28) of the cable (29), so that their distance affects the force transmitted by the transmission chain. In passive configuration the system is indistinguishable from one that does not mount the device, the force is transmitted by the cable as imposed by the pressure of the user on the lever.

Upon occurrence of the signal coming from the electronic control unit and calculated by said unit according to a control law which uses as data the measurements coming from position, wheel speed and acceleration sensors, or inertial or other sensors, a release mechanism similar to the one presented previously in application to the various mechanical mechanisms presented is activated by causing the relative rotation of the two components (33) of the kinematic mechanism, corresponding to the two ends (21, 22). The force to which the activation mechanism (9) is subjected is reduced, compared to the force transmitted by the braking system, thanks to the inclination between the two components (33) in the contact surface. The rotation corresponding to the activation determines an approach of the two ends, due to the different coupling of the contact surface (34). This control law determines from the measurement data the conditions of danger of wheel locking, stoppie or stability or other critical condition, in time to intervene automatically and promptly on the braking system. The advantages of this realization are on one hand common to the other realizations - reduced number of components, speed, lightness and reduced size and energy consumption, thanks to the free transition from active to passive configuration once the release has been carried out - on the other hand a greater constructive simplicity given by radial / axial symmetry.

The active configuration is characterized by a smaller relative distance between the two ends of the kinematic mechanism (21) and (22), due to a mechanical coupling variable according to the rotation, so as to reduce the braking force to the actuation place, in any of the positions of installation listed as examples but not exhaustively in the paragraph "presentation of the invention", applied to hydraulic or mechanical systems.

The reset exploits preferably a spring, similarly to what explained above and such as to bring the device back to the passive configuration once the pressure of the user on the lever drops. Said spring exerts a rotational force on the two sections of the kinematic mechanism which can passively push it back into a passive configuration. The spring must be of elastic constant lower than the force generally transmitted by an actuated brake, but greater than the force transmitted through the transmission chain by an unactuated brake. The action of the spring is therefore able to bring the device back to the passive configuration.

In each of the possible embodiments, it is desirable to insert a spring-damper group (8) to damp the impact of the mechanical linkage (11) at the end of the transition between passive and active configuration, so as to limit the mechanical stress to the components involved.

## Claims

1. Device for the reduction of the braking force applied to the wheels of the vehicles, preferably but not exclusively bicycles, including (Figure 12):
∘ An actuator, including:
▪ A mechanical linkage (11), inserted along the braking force transmission chain (Figures 1 and 2), which commutes in a reversible way between two configurations, defined as "passive" (Figures 3.2, 8.2, 9.1) and "active" (Figures 3.3, 8.1, 9.2); said configurations differing for the relative distance between the two ends (21, 22) of said linkage (11), said distance calculated along the direction of the force transmitted by said linkage (11) between said ends (21, 22), said ends constrained, along said force transmission direction, to components subject to the said force transmitted by said transmission chain, said commutation determining the variation of said braking force
▪ An activation mechanism (9) which constitutes a constraint to said configuration commutation of said linkage, moved at the occurrence of a signal external with respect to said actuator to a position which does not constitute a constraint to said commutation
▪ A solenoid, electric motor or equivalent (10) which moves said activation mechanism
▪ An automatic reset system which restores said linkage (11) to the said passive configuration and said activation mechanism (9) in activation interdiction position (Figures 3.2 and 8.3), where the reset is operated by a dedicated component, and not by the same solenoid, electric motor or equivalent (10).
∘ One or more measure instruments (Figure 12), said instruments being
▪ Wheel speed sensors
▪ Inertial measurement units
▪ Direct or indirect measure instruments of the braking force, or anyway of physical quantities which influence the vehicle dynamics
∘ An electronic control unit (Figure 12) which elaborates the signal of said measure instruments, which triggers the said activation of said linkage (11) through the command to said solenoid, electrical motor or equivalent, basing on a predetermined algorithm, said activation devoted to the mitigation of the risk of wheel locking, wheel lifting or vehicle loss of stability

2. Device according to claim 1 **characterized in that** said mechanical linkage (11) includes a spring-damper group (8) which exerts a force which counteracts the movement of the components of said linkage (11)

3. Device according to claim 1 where said reset dedicated component comprises a spring or equivalent passive component (17) which exerts a force which resets said linkage to said passive configuration, said spring **characterized by** an elastic constant lower than the necessary to prevent the activation of said linkage at the occurrence of forces transmitted by said transmission chain greater than the minimum activation threshold

4. Device according to claim 1 **characterized in that** said mechanical linkage (11) includes a rigid body (24) where two of its points constitute said ends of said linkage, where the rotation of said rigid body constitutes said commutation of configuration

5. Device according to claim 1 **characterized in that** said mechanical linkage (11) includes
• Two plates (19), which constitutes the said two ends of said linkage
• One or more groups of "fork and knife" rods (20), hinged together and one to one plate, and the other to the other plate
• One slider constraint (18) or equivalent constraint which, together with said rods (20), constraints to a relative translation only movement the said plates (19), said translation constituting said commutation of configuration and causing the rotation of said rods, said slider preferably a beam rigidly fixed to one of the said plates and free to slide in a hole in the other plate (Figure 8)

6. Device according to claim 1 **characterized in that** said activation mechanism (9) and said solenoid, electrical motor or equivalent (10) are rigidly connected directly or indirectly to one of the said plates (19)

7. Device according to claim 1 **characterized in that** said mechanical linkage (11) includes two components (33), where the extremities of said components placed in contact to each other on a contact surface (34) correspond to said ends (21 and 22) of said linkage, inserted along said braking force transmission chain, said linkage **characterized in that** the said contact surface (34) conformation determines different mechanical couplings, hence a relative distance between said ends variable along the force transmitted by said linkage, said variation corresponding to a relative rotation of the two said components (33) around an axis parallel to the direction of said transmitted force, said rotation constituting said commutation of configuration (Figure 9)

8. Device according to claim 1 **characterized in that** said ends (21, 22) of said linkage are one constrained to the brake lever in Bowden cable braking systems, while the other end is constrained to the extremity of the cable of said braking system (Figure 3)

9. Device according to claim 8 **characterized in that** said activation mechanism comprises a beam (9) hinged to the said brake lever (7), and said solenoid, electric motor or equivalent (10) is rigidly connected directly or indirectly to said lever (Figure 3.2, 3.3)

10. Device according to claim 1 **characterized in that** said ends (21, 22) of said linkage are connected in series to the housing (28) of a Bowden cable braking system (Figure 10) where said housing (28), otherwise continuous, is kept separated by said end (21, 22), where the separation distance is reduced by the activation of said mechanism

11. Device according to claim 1 **characterized in that** said ends (21, 22) of said linkage are connected in series to the master cylinder (15) in hydraulic braking systems (figures 6 and 11.1), said linkage (11) being installed between the brake lever (7) and the body of the brake command (5), the distance between said ends (21,22) being directly proportional to the piston (14) position inside said cylinder (15)

12. Device according to claim 8 or 11 **characterized in that** said reset dedicated component comprises a part (6) of the body of the brake command (5), or equivalent component rigidly linked to said body, which exerts a push to said linkage, said push resetting said linkage to said passive configuration when the brake lever is sufficiently released by the vehicle rider (Figures 4 and 6)

13. Device according to claim 1 **characterized in that** said device comprises an expansion chamber (25) hydraulically connected to the hydraulic braking system, where said linkage (11) is connected in series to said expansion chamber, said expansion chamber comprising a piston-cylinder assembly or bellows, said expansion chamber **characterized by** two ends (31) whose relative position determines the volume of liquid contained by said expansion chamber, said expansion chamber ends (31) connected to the said linkage ends (21, 22)
